# EUROPÄISCHE PATENTSCHRIFT

(11) **EP 2 072 191 B1**
(45) Veröffentlichungstag und Bekanntmachung des Hinweises auf die Patenterteilung: **23.04.2014**
(21) Anmeldenummer: 08105919.8
(22) Anmeldetag: 02.12.2008
(51) Int. Cl.: B25D 17/24

(54) **Handwerkzeugmaschine**
Hand-held power tool
Machine-outil manuelle

(30) Priorität: 17.12.2007 DE 102007055843
(43) Veröffentlichungstag der Anmeldung: 24.06.2009
(73) Patentinhaber: HILTI Aktiengesellschaft, 9494 Schaan (LI)
(72) Erfinder: Ohlendorf, Oliver, 86899, Landsberg (DE); Dieing, Christoph, 88316, Isny (DE); Kohlschmied, Frank, 80339, München (DE); Fischer, Axel, 86879, Wiedergeltingen (DE); Cehajic, Damir, 87471, Durach (DE); Ontl, Rainer, 86899, Landsberg am Lech (DE)

(56) Entgegenhaltungen:
- WO-A-2007/102449
- WO-A-2008/140030
- GB-A- 2 080 919
- JP-A- 3 140 649
- JP-A- 62 046 042
- US-A- 4 282 938
- US-A1- 2006 169 557

## Beschreibung

Die vorliegende Erfindung betrifft eine Handwerkzeugmaschine gemäß Oberbegriff des Anspruchs 1, insbesondere eine Handwerkzeugmaschine mit einem längs einer Achse, periodisch geführtem Werkzeug, wie z.B. einem Bohrhammer, einem Kombihammer, einem Meisselhammer, einem Schlagschrauber, einer Stichsäge und einer Säbelsäge.

Eine solche Handwerkzeugmaschine ist aus der WO-A-2007/102449 bekannt.

Ein handgehaltener Bohrhammer beschleunigt mittels seines Antriebs einen Bohrer längs einer Bewegungsachse. Der Bohrer erhält dabei einen Impuls und/oder ein Drehmoment, der den Bohrer in ein Werkstück treibt. Dem in die Gegenrichtung wirkenden komplementären Impuls wirkt der Anwender entgegen, indem er den Bohrhammer an einem Handgriff festhält.

Bei den periodisch arbeitenden Bohrhämmern muss der Anwender entsprechend eine über die Zeit periodische variierende Gegenkraft aufbringen. Dies nimmt der Anwender als störende Vibration wahr.

Ein Ansatz, die Handhabung der Bohrhämmer zu verbessern, ist, die periodisch auftretenden Kräfte gleichmässig über die Zeit zu verteilen. Entsprechende Dämpfungssysteme werden von den periodisch auftretenden Kräften angeregt und geben die Anregung über einen längeren Zeitraum wieder ab. Alternativ oder zusätzlich können Dämpfungssysteme die Anregung dissipativ in Wärme umwandeln.

Nach der FR 22 37 734 werden bei schlagenden Handwerkzeugmaschinen zur Verminderung von Vibrationen passive Schwingungsausgleicher eingesetzt. Eine Anordnung von zwei axial schwingenden, passiven Schwingungsausgleichern längs zu einem Schlagwerk ist aus der DE 815 179 bekannt. Der passive Schwingungsausgleicher kann hohlzylinderförmig ausgebildet sein (DE 12 81 970). Der passive Schwingungsausgleicher kann um ein Führungsrohr eines Schlagwerks herum angeordnet sein und der Schwingungsausgleicher wird längs zu dem Führungsrohr geführt (EP 1 710 052).

Es wurde erkannt, dass trotz solcher Dämpfungssysteme weiterhin auf den Anwender Vibrationen, d.h. periodische Momente, einwirken.

Eine Aufgabe besteht in einer Handwerkzeugmaschine, die eine weitergehende Reduzierung von auf den Benutzer einwirkender Momente und Vibrationen ermöglicht.

Diese Aufgabe kann durch die erfindungsgemäße Handwerkzeugmaschine gelöst werden.

Es wurde erkannt, dass auf den Anwender, z.B. einem Handwerker, neben den längs zu einer Bewegungsachse eines Werkzeugs oder Antriebs wirkenden ersten Kräften auch senkrecht zu den ersten Kräften zweite Kräfte periodisch auftreten. Der Anwender muss die Handwerkzeugmaschine nicht nur gegen das Werkstück pressen, sondern auch eine periodische Dreh- oder Kippbewegung der Handwerkzeugmaschine bezüglich des Werkstücks unterbinden.

Eine mögliche Erklärung wird in dem zu der Bewegungsachse des Werkzeugs versetzt angeordneten Schwerpunkt der Handwerkzeugmaschine gesehen. Die axiale Beschleunigung des Werkzeugs bewirkt daher ein Drehmoment auf die Handwerkzeugmaschine. Letztlich muss der Anwender ein entgegenwirkendes Drehmoment an dem Werkzeuggriff oder den Werkzeuggriffen aufbringen.

Das Torsionspendel kann durch ein einwirkendes Drehmoment angeregt werden und die Anregung verzögert wieder abgeben. Dies gilt insbesondere für periodisch auftretende Drehmomente, wie sie bei Handwerkzeugmaschinen mit zyklischen Bewegungen auftreten. Der Anwender oder eine Halterung der Handwerkzeugmaschine erfährt somit über die Zeit eine gleichmässige Belastung. Zudem können dissipative Elemente in dem Torsionspendel seiner Schwingungsbewegung Energie entziehen.

Die Begrifflichkeit eines Torsionspendels unterscheidet sich im Kontext dieser Beschreibung nicht von der üblich verwendeten Definition. Das Torsionspendel ist nur an einer Torsionsachse oder einem Punkt aufgehängt, um die sich das Torsionspendel verdrehen kann. Ein Rückstellelement wird beim Verdrehen verspannt, so dass das Torsionspendel wieder in Richtung seiner Ruhelage zurückgedreht wird. Angeregt wird das Torsionspendel durch Trägheitsmomente, die auf die Masse des Torsionspendel wirken.

In den Unteransprüchen sind Ausgestaltungen der Handwerkzeugmaschine angegeben.

Eine Ausführungsform der Handwerkzeugmaschine beinhaltet einen Linearantrieb zum Bewegen eines Werkzeugs längs einer Bewegungsachse und wenigstens eine Torsionsachse, die senkrecht zu der Bewegungsachse ist, wobei das Torsionspendel drehbar schwingend um die wenigstens eine Torsionsachse aufgehängt ist. Das Torsionspendel kann entlang einer Bahn in einer Ebene schwingen. In einer Weiterbildung schwingt das Torsionspendel längs einer gekrümmten Bahn. Dies kann insbesondere dann der Fall sein, wenn sich das Torsionspendel um zwei Torsionsachsen dreht. Die Schwingung um eine erste Achse erfolgt im Wesentlichen in einer Ebene. Aufgrund der Schwingung um die zweite Achse wird das Torsionspendel mit zunehmender Drehung um die zweite Achse senkrecht zu der Ebene ausgelenkt.

Eine Ausführungsform der Handwerkzeugmaschine beinhaltet einen Linearantrieb zum Bewegen eines Werkzeugs längs einer Achse. Das Torsionspendel ist derart angeordnet, dass die Schwingungsebene des Torsionspendels parallel oder geneigt zu der Achse liegt. In einer Weiterführung kann die Schwingungsebene parallel zu einer Symmetrieebene der Handwerkzeugmaschine liegen. Die Handwerkzeugmaschine weist einen Schwerpunkt auf. Das Torsionspendel kann derart angeordnet werden, dass eine Ebene, die von dem Schwerpunkt und der Achse aufgespannt wird, parallel zu der Schwingungsebene des Torsionspendels liegt. Die Anordnungen des Torsionspendels ermöglichen eine effiziente Einkopplung der in der Handwerkzeugmaschine auftretenden Drehmomente in das Torsionspendel.

Eine besondere Weiterbildung sieht vor, dass eine Torsionsachse des Torsionspendels durch den Schwerpunkt der Handwerkzeugmaschine verläuft. Hierdurch greifen sowohl die durch die Beschleunigung des Werkzeugs bedingten Drehmomente als auch die Drehmomente des Torsionspendels an einer gemeinsamen Symmetrieachse an. Ein Grad der Einkopplung der störenden Drehmomente in das Torsionspendel ist in dieser Weiterbildung vorteilhafterweise sehr hoch.

Eine Ausgestaltung sieht vor, dass das Torsionspendel eine Torsionsachse, wenigstens ein Federelement und wenigstens einen Massekörper aufweist, der über das Federelement mit der Torsionsachse mechanisch gekoppelt ist. Das Federelement kann in vielfältiger Weise ausgebildet sein. Das Federelement ist durch seine Funktion gekennzeichnet, den Massekörper nach einer Auslenkung aus einer Ruhelage wieder in die Ruhelage zurückzubewegen. Der Massekörper kann mehr als 25%, z.B. mehr als 50% der Gesamtmasse des Torsionspendels aufweisen. Der Massekörper trägt zu wenigstens 50% des Trägheitsmoments des Torsionspendels bei. Die mechanische Kopplung des Massekörpers mit der Torsionsachse kann einen Hebel aus einem steifen Material aufweisen.

Eine Ausgestaltung sieht vor, dass das Federelement als Blattfeder ausgebildet ist, die die Torsionsachse mit dem Massekörper verbindet. Die Blattfeder dient neben seiner Funktion als Rückstellelement zugleich als Hebel, um den Massekörper auf Abstand zu der Torsionsachse zu halten. Dieser Aufbau zeichnet sich durch seine Schlichtheit aus. In einer Weiterbildung kann das Federelement und der Massekörper als ein einteiliges Element ausgebildet sein.

In einer Weiterbildung weist das Federelement wenigstens zwei Abschnitte unterschiedlicher Federkonstanten auf. Die Drehbewegung einzelner Abschnitte des Torsionspendels kann den Raumerfordernissen in einem Gehäuse der Handwerkzeugmaschine angepasst werden. Bei einem einwirkenden Drehmoment erfährt ein Abschnitt mit einer hohen Federkonstante eine geringe Winkelauslenkung in Bezug auf seinen Anlenkpunkt verglichen zu einem Abschnitt mit einer geringen Federkonstante. Zudem kann eine nicht kreisförmige Bahnkurve des Massekörpers vorgegeben werden. Ein erster Abschnitt und ein zweiter Abschnitt der wenigstens zwei Abschnitte unterschiedlicher Federkonstanten können auch zueinander angewinkelt sein. Vielfältige Bahnkurven sind hierdurch vorgebbar, welche den Raumerfordernissen angepasst werden können.

Eine Ausgestaltung sieht vor, dass ein Trägheitsmoment und/oder eine Federkonstante des Torsionspendels einstellbar sind. Das Trägheitsmoment kann durch ein Verkürzen oder Verlängern eines Hebelarms erreicht werden. Hierzu ist ein entsprechender Verschiebemechanismus vorzusehen. Die Federkonstante kann geändert werden, in dem das Federelement zusätzlich belastet oder dessen effektive Länge verändert wird.

Eine Ausgestaltung sieht vor, dass der Linearantrieb das Werkzeug zyklisch mit einer Periodendauer entlang der Achse bewegt und eine Schwingungsperiode des Torsionspendels auf die Periodendauer abgestimmt ist. Ein Übereinstimmen einer der Resonanzfrequenzen des Torsionspendels mit der Anregungsfrequenz des Linearantriebs führt zu einer optimalen Einkopplung der störenden Drehmomente in das Torsionspendel.

Gemäß der Erfindung weist die Handwerkzeugmaschine ein Maschinengehäuse und einen Handgriff auf, wobei das Torsionspendel an dem Maschinengehäuse aufgehängt ist.

Ein Handgriff der Handwerkzeugmaschine ist von dem Maschinengehäuse durch vibrationsdämpfende Elemente mechanisch entkoppelt.

Gemäss einer Weiterbildung verläuft eine Schwingungsbahn des Torsionspendels wenigstens teilweise in dem Handgriff. Insbesondere eine Bahnkurve des Massekörpers verläuft teilweise in dem Handgriff.

Eine Ausführungsform sieht vor, dass der Linearantrieb einen Flugkolben beinhaltet. Ferner kann der Linearantrieb ein Schlagwerk aufweisen. Die Handwerkzeugmaschine kann eine Handwerkzeugmaschine oder eine ständergeführte Handwerkzeugmaschine sein. Die Handwerkzeugmaschine kann eine schlagende Handwerkzeugmaschine sein, z.B. ein Bohrhammer, ein Kombihammer, ein Meisselhammer, ein Schlagschrauber oder ein Kernbohrgerät. Eine Stichsäge und eine Säbelsäge können ebenfalls das Torsionspendel aufweisen.

Die nachfolgende Beschreibung erläutert die Erfindung anhand von exemplarischen Ausführungsformen und Figuren. In den Figuren zeigen:

### KURZBESCHREIBUNG DER FIGUREN

- Fig. 1: einen Längsschnitt durch eine Handwerkzeugmaschine;
- Fig. 2: einen Querschnitt durch die Handwerkzeugmaschine von Fig. 1;
- Fig. 3: einen Längsschnitt durch eine Handwerkzeugmaschine;
- Fig. 4: einen Querschnitt durch die Handwerkzeugmaschine von Fig. 3;
- Fig. 5: eine Ansicht eines Torsionspendels zur Verwendung in einer Handwerkzeugmaschine; und
- Fig. 6: einen Längsschnitt durch eine Handwerkzeugmaschine;
- Fig. 7: eine Seitenansicht eines Torsionspendel zur Verwendung in einer Handwerkzeugmaschine;
- Fig. 8: einen Querschnitt durch eine Handwerkzeugmaschine; und
- Fig. 9: einen Querschnitt durch eine Handwerkzeugmaschine.

### BESCHREIBUNG VON AUSFÜHRUNGSFORMEN

Gleiche oder funktionsgleiche Elemente werden durch gleiche Bezugszeichen in den Figuren indiziert, soweit nicht anders angegeben. Abmessungen und Grössenverhältnisse der einzelnen dargestellten Elemente können zur besseren Anschauung und Darstellung verzerrt sein.

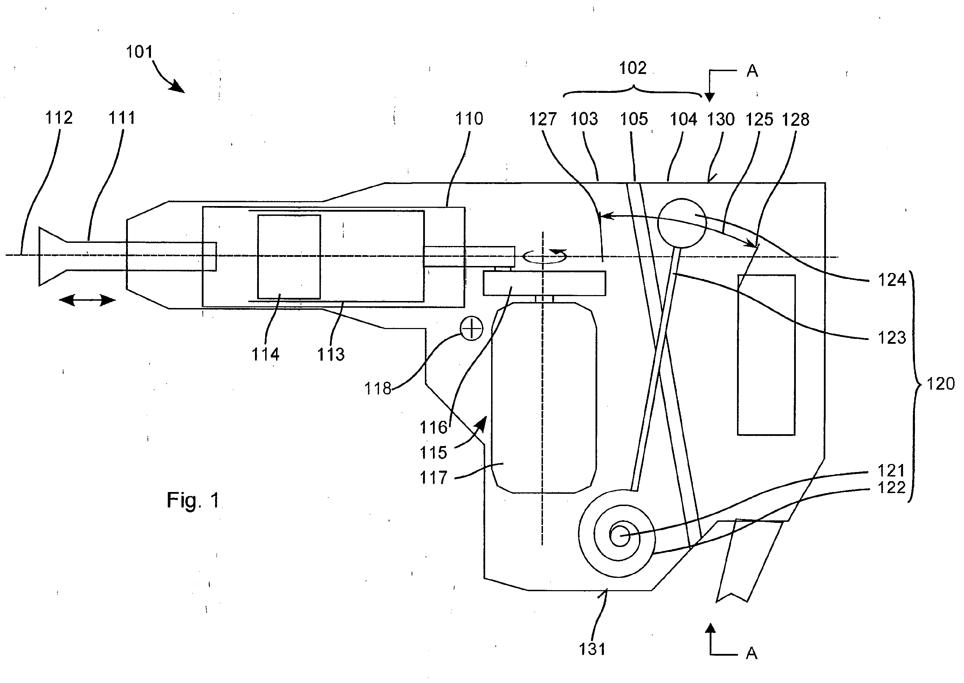

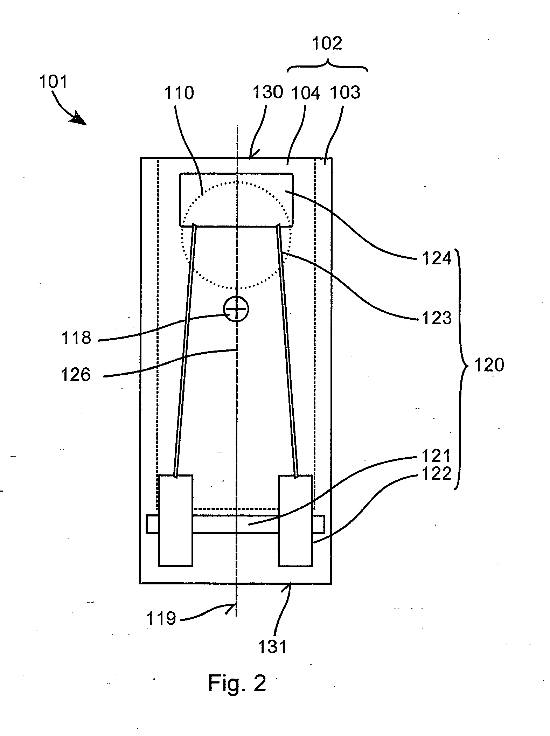

Fig. 1 zeigt eine beispielhafte Handwerkzeugmaschine 1 in einem Längsschnitt. Fig. 2 zeigt die Handwerkzeugmaschine 1 in einem Schnitt entlang der in Fig. 1 angedeuteten Ebene A-A.

Die Handwerkzeugmaschine 101 kann beispielsweise eine Bohrmaschine, ein Bohrhammer oder eine andere handgehaltene oder geführte Handwerkzeugmaschine sein. Ein Gehäuse 102 der Handwerkzeugmaschine 101 kann einteilig ausgebildet sein. Alternativ kann das Gehäuse 102 ein Maschinengehäuse 103 und einen Handgriff 104 aufweisen. Der Handgriff 104 ist vorzugsweise von dem Maschinengehäuse 103 durch vibrationsdämpfende Elemente 105 entkoppelt. Eine weitere Ausgestaltung sieht einen Ständer anstelle oder zusätzlich zu dem Handgriff 104 vor. Der Ständer kann durch vibrationsdämpfende Elemente von dem Gehäuse 102 oder dem Maschinengehäuse 103 entkoppelt sein.

In dem Maschinengehäuse 103 ist ein Linearantrieb 110 zum Antreiben eines Werkzeugs 111 entlang einer Bewegungsachse 112 angeordnet. Der Linearantrieb 110 beschleunigt das Werkzeug 111 linear. Der Linearantrieb 110 vollführt somit eine translatorische Bewegung in axialer Verlängerung zu dem Werkzeug 111. Ein Beispiel für den Linearantrieb 110 ist ein Schlagwerk 113 mit einem Flugkolben 114. Bei einem Schlagschrauber oder einem Bohrhammer kann das Werkzeug 111 zusätzlich zu seiner translatorischen Bewegung um die Bewegungsachse 112 gedreht werden.

Der Linearantrieb 110 selbst kann durch einen Primärantrieb 115, z.B. mittels eines Exzenters 116, angetrieben werden. Der Primärantrieb 115 kann beispielsweise einen Elektromotor 117, ein magnetodynamisches, elektrodynamisches, pneumatisches oder hydraulisches Antriebsmittel umfassen.

Der Linearantrieb 110 wird zyklisch mit einer Periodendauer angeregt. Die Periodendauer kann für die Handwerkzeugmaschine 101 fest vorgegeben sein. Alternativ ist ein Wahlschalter (nicht dargestellt) vorgesehen, mit dem die Periodendauer von einem Anwender eingestellt werden kann. Die Schlagfrequenz bezeichnet die zu der Periodendauer inverse Grösse.

Ein Schwerpunkt 118 des Handwerkzeugmaschine 101 ist beabstandet von der Bewegungsachse 112. Dies kann sich wegen der Anordnung der schwersten Komponenten, wie Linearantrieb 110 und Primärantrieb 115, in dem Gehäuse 102 ergeben. Der Schwerpunkt 118 kann in einer Symmetrieebene 119 der Handwerkzeugmaschine 101 liegen.

Der Linearantrieb 110 überträgt einen Impuls auf das Werkzeug 111 in Richtung der Bewegungsachse 112. Ein Impuls gleicher Stärke wird in entgegengesetzter Richtung auf den Handgriff 104 bzw. den Ständer ausgeübt. Weil die Bewegungsachse 112 nicht durch den Schwerpunkt 118 verläuft, führt der Impuls zu einem Drehmoment um den Schwerpunkt 118. Das Drehmoment wirkt in einer Drehebene, die durch die Bewegungsachse 112 und den Schwerpunkt aufgespannt wird. Die Drehebene fällt in der dargestellten Ausführungsform mit der Symmetrieebene 119 der Handwerkzeugmaschine 101 zusammen, da sowohl die Bewegungsachse 112 als auch der Schwerpunkt 118 in der Symmetrieebene 119 liegen.

Der Betrag des Drehmoments kann nach dem Hebelgesetz unter Berücksichtigung des geringsten Abstands der Bewegungsachse 112 von dem Schwerpunkt 118 bestimmt werden. Der Betrag des Drehmoments variiert mit der Periodendauer, die von dem Linearantrieb 110 vorgegeben wird. Die Schlagfrequenz von deutlich grösser als einem Hertz führt dazu, dass der Bediener das Auftreten eines Drehmoments nicht als ein einzelnes Ereignis sondern als eine fortwährende Vibration wahrnimmt.

In dem Maschinengehäuse 103 ist ein Torsionspendel 120 angeordnet. Das Torsionspendel 120 weist beispielsweise eine Torsionsachse 121, ein Rückstellelement 122, einen Hebel 123 und einen Massekörper 124 auf. Die Torsionsachse 121 kann durch den Anlagepunkt 125 des Torsionspendels 120 an dem Maschinengehäuse 103 festgelegt sein. Das Rückstellelement 122 ist beispielsweise eine Blattfeder. Der Hebel 123 kann verglichen zu der Blattfeder steif ausgebildet sein. Der Massekörper 124 bildet vorzugsweise den Hauptteil der Masse des Torsionspendels 120, wenigstens 25%, z.B. 50%. Das Trägheitsmoment des gesamten Torsionspendels 120 ist zu wenigstens 50%, z.B. 75% durch den Massenkörper vorgegeben.

Der Massekörper 124 kann sich entlang einer Bahnkurve 125 in einer Schwingungsebene 126 des Torsionspendels 120 bewegen. Die Bahnkurve 125 ist im Wesentlichen durch den steifen Hebel 123 vorgegeben. Die Bahnkurve 125 verläuft im Wesentlichen entlang einer Kreisbahn. Der Massekörper 124 kann für die Beschreibung der Bahnkurve 125 auf einen Schwerpunkt des Massekörpers reduziert betrachtet sein.

Falls das Rückstellelement 122 sich bei einer Auslenkung des Massekörpers 124 aus einer Ruhelage verformt, nimmt das Rückstellelement 122 ebenfalls Einfluss auf die Gestalt der Bahnkurve 125. Entsprechend ergibt sich eine Abweichung von der Kreisbahn. Eine Abweichung von der Kreisbahn ergibt sich auch, wenn der Hebel 123 wenigstens teilweise elastisch ausgebildet ist.

Das Torsionspendel 120 ist mit seiner Schwingungsebene 126 parallel zu der Drehebene, festgelegt durch den Schwerpunkt 118 und die Bewegungsachse 112, angeordnet. Vorzugsweise liegt die Schwingungsebene 126 in der Drehebene, insbesondere wenn die Drehebene der Symmetrieebene 119 der Handwerkzeugmaschine 101 entspricht.

Nach einem einmaligen Auslenken schwingt das Torsionspendel 120 mit seiner Eigenfrequenz. Die Eigenfrequenz beschreibt die freie Schwingung des Torsionspendels 120. Die Eigenfrequenz ist durch den Aufbau des Torsionspendels 120 vorgeben. Insbesondere ein Trägheitsmoment des Torsionspendels 120 und eine Federkonstante der Rückstellelements 122 legen die Eigenfrequenz fest. Das Trägheitsmoment wird durch den Abstand des Massekörpers 124 von der Torsionsachse 121 festgelegt. Der Abstand ist auf den Schwerpunkt des Massenkörpers 124 zu beziehen. Die Lage des Schwerpunkts kann durch eine konstruktive Ausgestaltung des Massenkörpers 124 festgelegt werden.

Die beschriebene Anordnung des Torsionspendels 120 in der Handwerkzeugmaschine 101 bewirkt, dass das Torsionspendel 120 von den periodisch auftretenden Drehmomenten zu einer Drehschwingung angeregt wird. Das Torsionspendel 120 nimmt ein Drehmoment bis zu einem Umkehrpunkt 127, 128 der Bahnkurve 125 des Torsionspendels 120 auf. Das Drehmoment bewirkt zum Teil eine elastische Verformungsarbeit des Rückstellelements 122. Ein weiterer, geringerer Anteil des Drehmoments kann eine plastische Verformung und sonstige dissipative Arbeit verrichten. Nach dem Umkehrpunkt 127, 128 der Bahnkurve 125 entspannt sich das Torsionspendel 120 und gibt ein Drehmoment ab.

Eine Phase des anregenden Drehmoments eilt einer Phase des von dem Torsionspendel 120 abgegebenen Drehmoments voraus. Hierdurch ergibt sich eine teilweise destruktive und teilweise konstruktive Überlagerung der beiden Drehmomente. Obwohl das zeitlich gemittelte Drehmoment, abgesehen von dissipativen Anteilen, erhalten bleibt, ist die maximale Amplitude des Gesamtdrehmoments geringer als die Amplitude des von dem Linearantrieb 110 bewirkten periodischen Drehmoments. Das Torsionspendel 120 wirkt als Puffer, das Spitzenwerte eines Drehmoments aufnimmt und das aufgenommene Drehmoment zeitlich verzögert wieder abgibt.

Eine bevorzugte Ausgestaltung sieht vor, dass die Eigenfrequenz des Torsionspendels 120 oder eine ihrer harmonischen Frequenzen der Schlagfrequenz des Linearantriebs 110 entspricht. Das Torsionspendel 120 erfährt bei einer resonanten Anregung seine grösste Auslenkung aus der Ruhelage. Infolge kann das Torsionspendel 120 ein grösseres Drehmoment aufnehmen und zwischenspeichern. Eine Phasendifferenz zwischen dem anregenden Drehmoment und dem von dem Torsionspendel 120 abgegebenen Drehmoment beträgt etwa 90°.

Die Übertragung des periodischen Drehmoments auf das Torsionspendel 120 ist somit im resonanten Fall besonders effizient. Das Torsionspendel 120 kann daher mit einer Eigenfrequenz ausgelegt sein, die um maximal 10%, z.B. 5%, bevorzugt 2%, von der Schlagfrequenz des Linearantriebs 110 abweicht.

Die vorangegangenen Erläuterungen fassen Arbeitsthesen der Erfinder zu den Wirkprinzipien des Torsionspendels 120 zusammen. Die Arbeitsthesen ermöglichen Ausführungsformen eines Torsionspendels 120 auszuarbeiten. Es wird jedoch kein Anspruch auf wissenschaftliche Vollständigkeit erhoben. Insbesondere ist die Handwerkzeugmaschine nicht auf die obigen Erläuterungen beschränkt, falls Wirkungsprinzipien eines Torsionspendels nicht durch die obigen Arbeitsthesen beschrieben werden.

Im nachfolgenden werden mehrere Ausführungsformen verschiedener Torsionspendel und ihre Anordnung in dem Gehäuse 2 erläutert. Obwohl manche Details im Zusammenhang mit einer speziellen Ausführungsform beschrieben sind, wird ausdrücklich darauf hingewiesen, dass diese auch in anderen Zusammenstellungen kombinierbar sind.

Fig. 1 zeigt ein Torsionspendel 120, dessen Rückstellelement 122 durch eine Spiralfeder 122 ausgebildet wird. Ein Zentrum der Spiralfeder 122 ist an dem Maschinengehäuse 103 befestigt. Die Spiralfeder 122 kann sich um ihr Zentrum drehen und wird dabei mechanisch gespannt. Am Umfang der Spiralfeder 122 ist der Hebel 123 befestigt. Der Hebel 123 ist vorzugsweise steif. An einem der Spiralfeder 122 abgewandten Ende des Hebels 123 ist der Massekörper 124 befestigt. Der Massekörper 124 kann aus dem gleichen Material wie der Hebel 123 hergestellt sein. In einer Ausgestaltung sind der Massekörper 124 und der Hebel 123 einstückig hergestellt.

Die Spiralfeder 122 ändert nur geringfügig ihre Form, wenn das Torsionspendel 120 ausgelenkt wird. Insbesondere ist vorgesehen, dass das Torsionspendel 120 um höchsten 30°, z.B. höchstens 10°, höchstens 5° aus der Ruhelage ausgelenkt wird. Der Massekörper 124 bewegt sich daher weitgehend auf einer Kreisbahn 125.

Die Kreisbahn 125 liegt in einer Ebene, die parallel zu einer Drehebene definiert durch den Schwerpunkt 118 und die Bewegungsrichtung 112 liegt. In der Ruhelage kann der Hebel 123 beispielsweise gegenüber der Bewegungsachse 112 des Handwerkzeugs 101 im Bereich zwischen 20° und 90° geneigt sein.

Die Torsionsachse 121 kann wie dargestellt in der Nähe eines Bodens 131 des Gehäuses 102 angeordnet sein. Alternativ kann die Torsionsachse 121 in der Nähe einer Oberseite 130 des Gehäuses 102 angeordnet sein, hierdurch ergibt sich eine hängende Konstruktion. In einer anderen Ausgestaltung kann das Torsionspendel 120 an einem Gehäuse des Primärantriebs 115 oder eines Getriebes befestigt sein.

Die Länge des Hebels 123 ist vorzugsweise grösser als die Hälfte der Höhe des Gehäuses 102, z.B. wenigstens drei Viertel der Höhe des Gehäuses. Ein Torsionspendel 120 mit einem grossen Hebel 123 kann ein grosses Drehmoment bereits bei kleinen Auslenkungen aus der Ruhelage zwischenspeichern.

Das Torsionspendel 120 ist vorzugsweise an dem Maschinengehäuse 103 befestigt. Der Handgriff 104 kann von dem Torsionspendel 120 mechanisch entkoppelt sein, z.B. durch die Dämpfungselemente 106. Die Bahnkurve 125 kann zum Teil in dem Handgriff 104 verlaufen. Beispielsweise kann der Massekörper 124 in Ruhelage bereits, z.B. wie dargestellt, in dem Handgriff 104 sein.

Das Torsionspendel 120 kann auch liegend in dem Maschinengehäuse 103 angeordnet sein. Das bedeutet in Ruhelage ist der Hebel 123 parallel zu der Bewegungsrichtung 112 des Werkzeugs 111.

Ein Schwerpunkt des Massekörpers 124 kann ausserhalb der Drehebene definiert durch den Schwerpunkt des Maschinenwerkzeugs 101 und die Bewegungsrichtung 112 angeordnet sein. Die Schwingung des Torsionspendels 120 übt somit ein Drehmoment aus, das in einer Ebene senkrecht zu der Bewegungsrichtung 112 liegt. Entsprechende Drehmomente bedingt durch den Linearantrieb 110 können auf diese Weise kompensiert werden.

Für eine Handwerkzeugmaschine 101 mit einer Masse von 6700 g und einer dominanten Vibrationsfrequenz von 53 Hz erweist sich beispielsweise eine Federkonstante C von etwa 1,1 Nm/°, einer Länge des Hebels 124 von etwa 200 mm und eine Masse des Massenkörpers von etwa 100 g geeignet. Diese Zahlen dienen einzig als Beispiel. Vielfältige Zusammenstellungen anderer Federkonstanten, Längen und Massen können ebenfalls für die spezifizierte Handwerkzeugmaschine 101 geeignet sein.

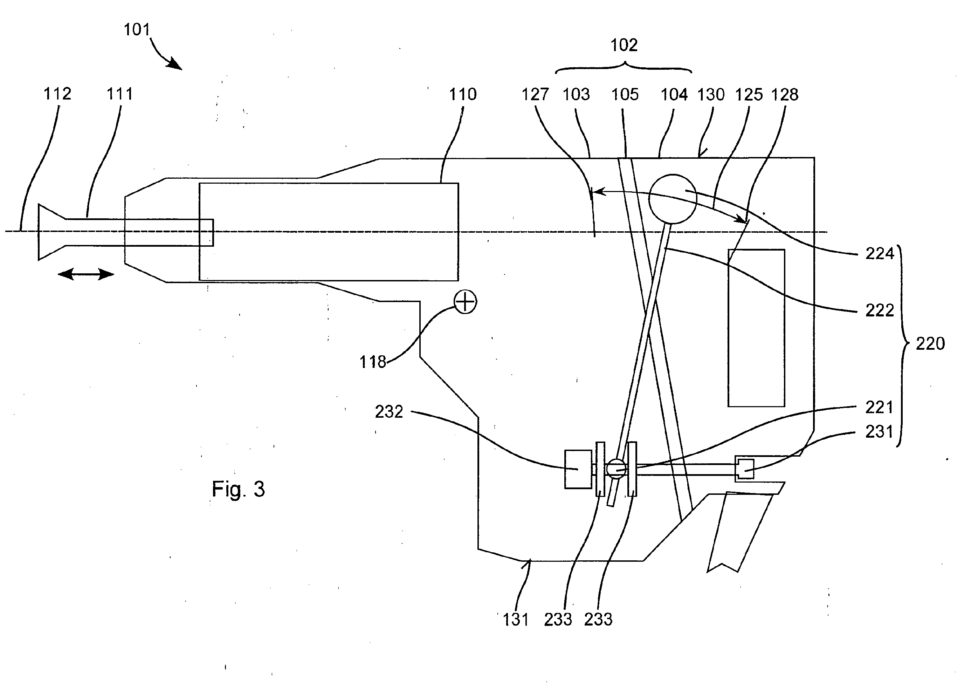

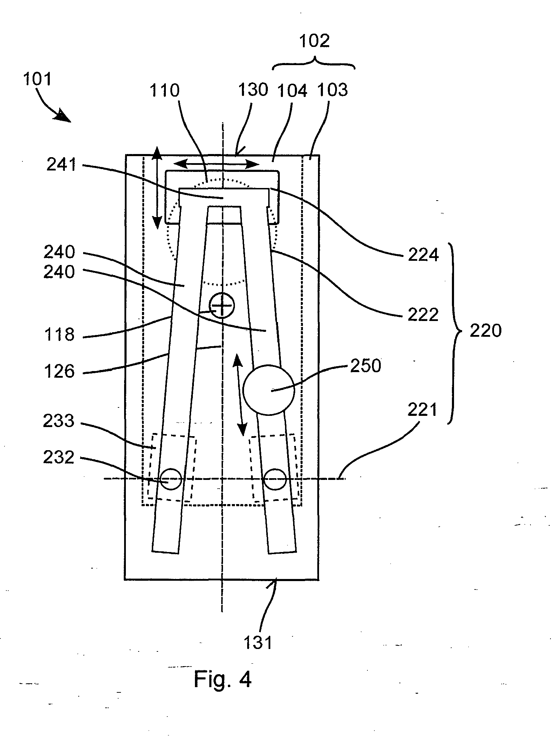

Fig. 3 und 4 zeigen eine weitere Ausführungsform. Ein Torsionspendel 220 weist eine Torsionsachse 221, eine Blattfeder 222 und einen Massekörper 224 auf. Die Blattfeder 222 bildet zugleich ein Rückstellelement und einen Hebel. Hierdurch ist eine besonders einfache Konstruktion möglich.

Die Blattfeder 222 ist an einem Ende an dem Maschinengehäuse 103 gelagert. Dieses Ende bildet die Torsionsachse 221. Das Lager kann beispielsweise durch eine Befestigungsschraube 231 gebildet werden, die zum Befestigen des Handgriffs 104 an einem Anker 233 des Maschinengehäuses 103 dient. An dem Ende der Blattfeder 222 ist hierfür eine Bohrung 232 vorgesehen, durch die die Befestigungsschraube 231 geschoben ist. Aufnahmezapfen 233 können beidseitig der Bohrung 232 angeordnet sein, um ein Verschieben der Blattfeder 222 entlang der Befestigungsschraube 231 zu verhindern. Die Aufnahmezapfen 233 können aus einem elastischen, dämpfenden Material ausgebildet sein, um eine Übertragung von Schwingungen des Maschinengehäuses 103 auf den Handgriff 104 zu verringern.

Die Blattfeder 222 kann u-förmig mit zwei symmetrisch angeordneten Stegen 240 und einem die Stege 240 verbindenden Quersteg 241 ausgebildet sein. An dem Quersteg 241 ist der Massekörper 224 befestigt. Der Massekörper 224 kann aus zwei Teilen zusammengesetzt sein, die den Quersteg 241 umschliessen.

Eine Zusatzmasse 250 kann vorgesehen sein, um die Eigenfrequenz des Torsionspendels 220 zu verändern. Die Zusatzmasse 250 kann beispielsweise als Reiter an der Blattfeder 222 festgeklemmt sein. Die Zusatzmasse 250 kann entlang des Stegs 240 der Blattfeder verschoben werden.

In einer weiteren Ausgestaltung ist vorgesehen, den Massekörper 224 entlang der Blattfeder 222 verschiebbar anzubringen. Der Massekörper 224 kann durch einen Rastmechanismus an der Blattfeder 222 gehalten sein, um einen definierten Abstand zu der Torsionsachse 221 aufzuweisen.

Das Torsionspendel 220 kann sich zusätzlich um die Torsionsachse 221 auch um eine vertikale Torsionsachse 250 drehen. Dies kann insbesondere von Vorteil sein, wenn der Schwerpunkt 118 und die Bewegungsrichtung 112 nicht in einer Ebene parallel zu der Schwingungsebene 126 liegen. Die hierdurch wirkenden Drehmomente senkrecht zur Bewegungsrichtung 112 und senkrecht Torsionsachse 112 werden durch die weitere Drehrichtung des Torsionspendels 220 aufgenommen.

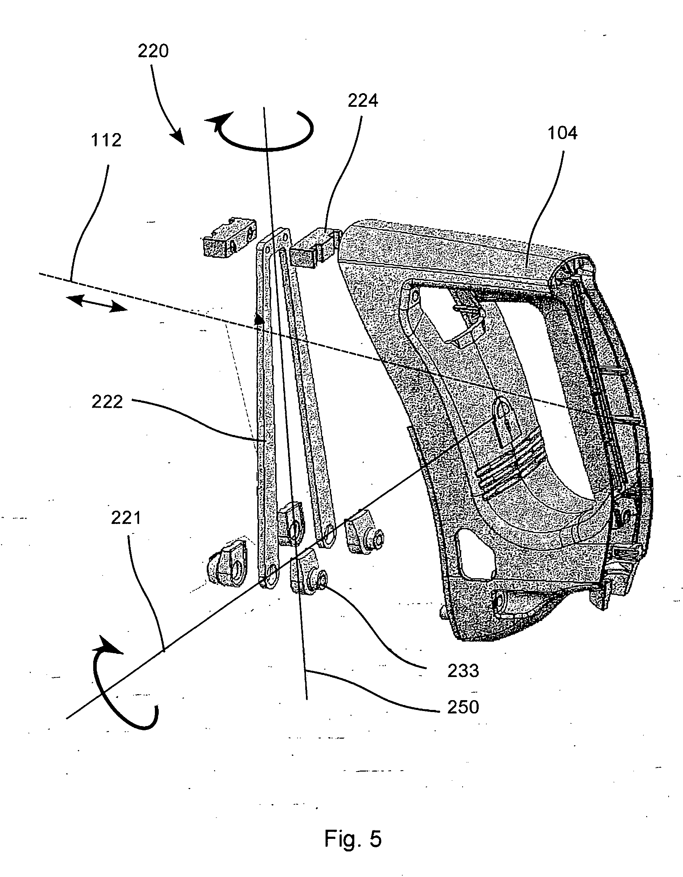

Fig. 5 zeigt perspektivisch die zwei Torsionsachsen 221, 250. Die Torsionsachsen 221, 250 sind zu einander verkippt und gegenüber der Bewegungsachse 112 des Linearantriebs 110 verkippt. In der dargestellten Ausführungsform sind die drei Achsen 112, 221, 250 zueinander senkrecht.

Das Torsionspendel 220 kann durch einen Drehimpuls angeregt werden, der parallel zu der ersten Torsionsachse 221 oder der parallel zu zweiten Torsionsachse 250 wirkt und einer beliebigen Kombination der beiden Drehimpulse angeregt werden. Hierdurch können Vibrationen reduziert werden, die ein Anwender als eine Auf- und Abbewegung des Handgriffs oder eine links- rechts Bewegung des Handgriffs wahrnehmen würde.

Der Massekörper 224 kann parallel zu der ersten Torsionsachse 221 verschiebbar gelagert sein. Hierdurch kann das Trägheitsmoment um die zweite Torsionsachse 250 an die auftretenden Schwingungen, insbesondere Frequenzen, angepasst werden.

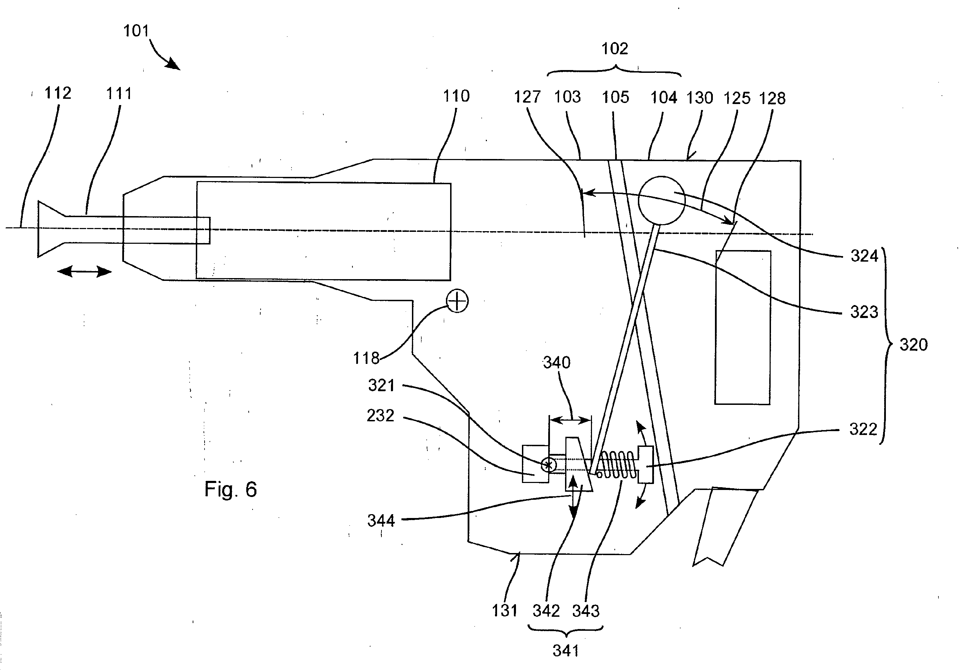

Fig. 6 zeigt eine weitere Ausgestaltung eines Torsionspendels 320. Ein Federelement 322 ist mit dem Maschinengehäuse 103 verbunden. Der Verbindungspunkt des Federelements 322 mit dem Maschinengehäuse 103 definiert die Torsionsachse 321 des Torsionspendels 320. Eine Kurvenbahn deutet in Fig. 5 die Bewegung des Federelements 322 beim Schwingen des Torsionspendels 320 an. Ein Hebel 323 ist verschiebbar auf dem Federelement 322 gelagert. Der Hebel 323 verbindet das Federelement 322 mit einem Massekörper 324. Eine Eigenfrequenz des Torsionspendels 320 kann durch Anpassen eines Abstandes 340 des Hebels 324 von der Torsionsachse 321 eingestellt werden.

Ein Mechanismus 341 zum Festlegen des Abstands 340 kann beispielsweise einen Keil 342 und eine Rückstellfeder 343 umfassen. Der Keil 342 erzwingt den Abstand 340 zwischen einer Ruhelage des Hebels 323 auf dem Federelement 322. Der Keil 342 ist verschiebbar entlang einer Richtung 344 senkrecht zur Längsrichtung des Federelements 322. Hierdurch kann der Abstand 340 eingestellt werden. Die Rückstellfeder 343, die auf einer dem Keil 342 gegenüberliegenden Seite des Hebels 323 angeordnet ist, klemmt den Hebel 323 an dem Keil 342 fest. Anstelle eines Keils 342 können andere Verschiebemittel verwendet werden, z.B. eine Spindel.

Die Veränderung der effektiven Länge des Federelements 322 bewirkt eine Änderung seiner Federkonstante und eine Änderung des Abstands des Massenkörpers 324 von der Torsionsachse 321. Der Mechanismus 341 ermöglicht daher, die Eigenfrequenz des Torsionspendels 320 an die Schlagfrequenz des Linearantriebs 110 anzupassen. Ein entsprechender Wahlschalter für die Schlagfrequenz kann über ein Gestänge mit dem Mechanismus 341 mechanisch oder elektromechanisch gekoppelt sein.

Der Hebel 323 und das Federelement 322 sind vorzugsweise zueinander angewinkelt. Der Winkel kann im Bereich von 30° bis 120°, z.B. 80° bis 100° liegen. Eine Ausgestaltung sieht jedoch auch vor, den Hebel 324 teleskopartig zu dem Federelement 323 anzuordnen.

Der Hebel 324 kann als Blattfeder ausgebildet sein. Eine Steifigkeit des Hebels 324 kann unterschiedlich zu einer Steifigkeit des Federelements 323 ausgebildet sein.

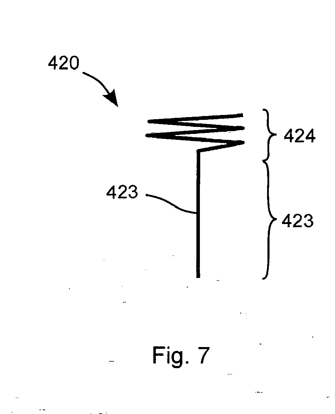

Fig. 7 zeigt ein Torsionspendel 420 in einer Seitenansicht. Das Torsionspendel 420 ist aus einer Blattfeder gebildet. Ein Hebel 423 bildet zugleich ein Rückstellelement 422. Ein Massekörper 424 ist durch ein mehrfaches Falten eines Endes der Blattfeder hergestellt.

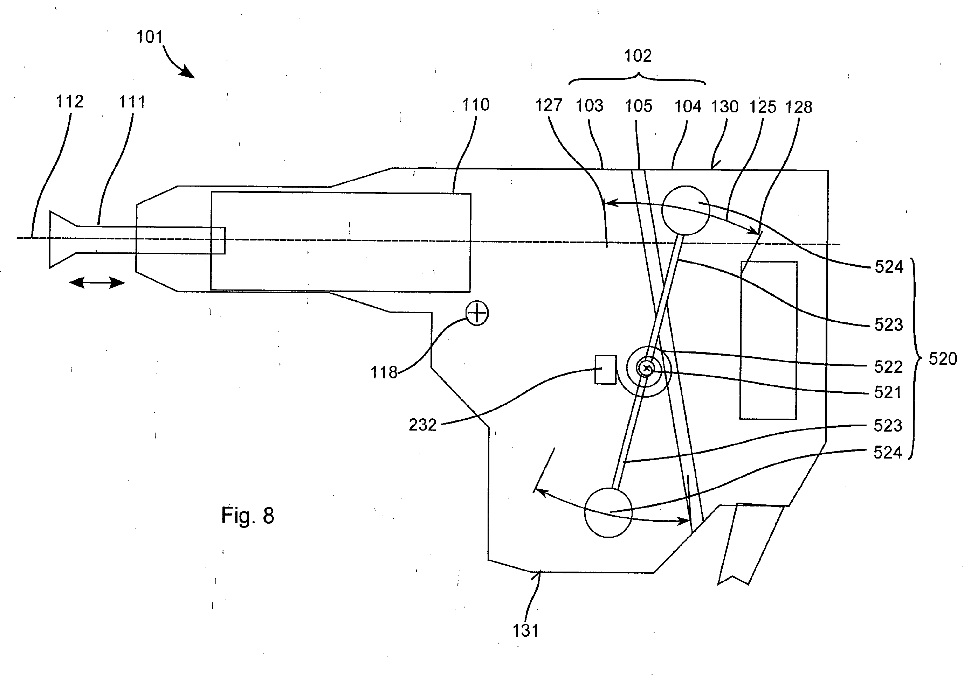

Fig. 8 zeigt eine weitere Ausführungsform einer Handwerkzeugmaschine 101. Ein Torsionspendel 520 weist eine Torsionsachse 521 auf, an der wenigstens zwei separate Massekörper 524 angreifen. Die Massekörper 524 sind über Hebel 523 mit der Torsionsachse 521 über ein gemeinsames Rückstellelement 522 mechanisch gekoppelt. Ein Schwerpunkt des Torsionspendels 520 liegt vorzugsweise auf der Torsionsachse 521.

Das Torsionspendel 520 ermöglicht, die Torsionsachse 521 nahe dem Schwerpunkt 118 der Handwerkzeugmaschine 101 anzuordnen und gleichzeitig ein hohes Trägheitsmoment bereitzustellen. Die von dem Torsionspendel 520 aufgenommenen und abgegebenen Drehmomente greifen weitgehend an dem gleichen Drehpunkt an, wie die Drehmomente bedingt durch den Linearantrieb 110. Hierdurch wird eine gute Dämpfung der Drehschwingungen durch das Torsionspendel 520 erreicht.

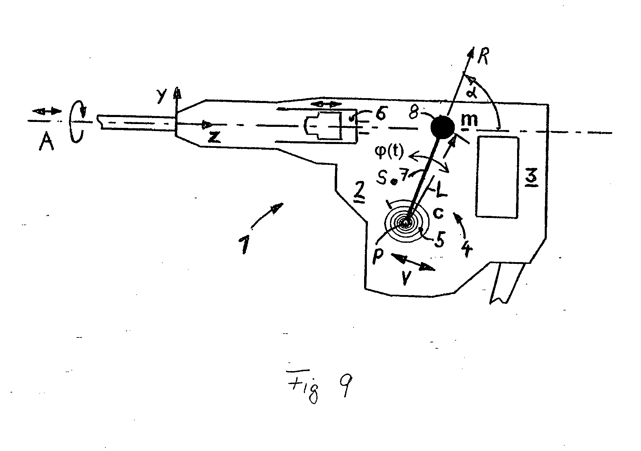

Nach der Darstellung in Fig. 9 weist eine längs einer Erregerachse A vibrierende Handwerkzeugmaschine 1 in Form eines drehenden und schlagenden Bohrhammers ein Maschinengehäuse 2 und einen handhabbaren Führungshandgriff 3 auf. Zur Dämpfung von durch einen Antrieb 6 in Form eines pneumatisches Schlagwerks verursachten, in der dargestellten Geräteebene mit dem Schwerpunkt S liegenden Vibrationen V ist ein Schwingungsausgleicher 4 vorhanden, der als Pendelschwinger mit einem in sich federelastischen Hebel 7 in Form eines Drahtfederelements und einer gehäusefesten Drehfeder 5 in Form einer Spiralfeder zum Hebel 7 ausgebildet ist. Die vom Drehpunkt P um den Hebel 7 beabstandete Ausgleichsmasse 8 schwingt mit der Winkelauslenkung [phi](t) in der Schwingungsebene, welche mit der Geräteebene identisch ist, um eine vom Drehpunkt P aus orientierte Ruherichtung R herum, die in einem Winkel [alpha] von 70° zur griffseitigen Erregerachse A orientiert ist. Falls (nicht extra dargestellt) die Ausgleichsmasse 8 aus zwei miteinander starr verbundenen, gleichgrossen Teilmassen besteht, die unterhalb und oberhalb der dargestellten Geräteebene angeordnet sind und ihren Teilmassenmittelpunkt jeweils in einer Teilebene haben, die gleich beabstandet jeweils parallel zur Geräteebene liegt, so liegt der Massenmittelpunkt der gesamten Ausgleichsmasse 8 dennoch in der Geräteebene, wodurch diese mit der Schwingungsebene identisch ist. Jedoch sind allgemein auch andere (geneigte) Orientierungen der Schwingungsebene zur Geräteebene möglich und vom Erfindungsgedanken umfasst. Bei einer (nicht extra dargestellten) Säbelsäge oder Stichsäge ist dies analog, wobei die vom Antrieb 6 erzeugte Erregung statt durch das pneumatische Schlagwerk durch die Hin- und Herbewegung der Hubstange sowie deren Schnittkräfte hervorgerufen wird.

Beispielsweise ist bei einer Handwerkzeugmaschine mit einer Maschinenmasse von 6700 g und einer dominanten Vibrationsfrequenz von 53 Hz für den Schwingungsausgleicher 4, welcher um den Drehpunkt P bei Z = 340mm und Y = -180 mm um seine Ruherichtung R im Winkel [alpha] = 70° zur griffseitigen Erregerachse A mit einer Winkelauslenkung von [phi] = +/- 4° herum schwingt, das Werte-Tripel { C = 1,1Nm/°; L = 200 mm; m = 100g } mit der (gesamten) Federnachgiebigkeit C der Feder 5, der Länge L des Hebels 7 und der Masse m der Ausgleichsmasse 8 geeignet.

## Patentansprüche

1. Handwerkzeugmaschine mit
einem Maschinengehäuse (103);
einem Handgriff (104), der durch vibrationsdämpfende Elemente (105) von dem Maschinengehäuse (103) entkoppelt ist;
einem Linearantrieb (110) zum Bewegen eines Werkzeugs (111) längs einer Bewegungsachse (112) und **gekennzeichnet durch**
einem Torsionspendel, das eine an dem Maschinengehäuse (103) aufgehängte Torsionsachse (121), wenigstens ein Federelement (122) und wenigstens einen Massekörper (124), der über das Federelement (122) mit der Torsionsachse (121) mechanisch gekoppelt ist, aufweist.

2. Handwerkzeugmaschine nach Anspruch 1, **dadurch gekennzeichnet, dass** eine Schwingungsebene (126) des Torsionspendels (120) parallel zu einer Ebene, die von einem Schwerpunkt (118) der Handwerkzeugmaschine und der Bewegungsachse (112) aufgespannt wird, ist.

3. Handwerkzeugmaschine nach Anspruch 1 oder 2, **dadurch gekennzeichnet, dass** die Torsionsachse (121) in der Nähe eines Bodens (131) des Maschlnengehäuses (103) angeordnet ist.

4. Handwerkzeugmaschine nach einem der vorhergehenden Ansprüche, **dadurch gekennzeichnet, dass** die Torsionsachse (121) weiter von der Bewegungsachse (112) als der wenigstens eine Massekörper (124) von der Bewegungsachse (112) angeordnet ist.

5. Handwerkzeugmaschine (1; 101) nach einem der vorhergehenden Ansprüche, **dadurch gekennzeichnet, dass** das Federelement (222) als Blattfeder ausgebildet ist, die die Torsionsachse (221) mit dem Massekörper (224) verbindet.

6. Handwerkzeugmaschine (1; 101) nach einem der vorhergehenden Ansprüche, **dadurch gekennzeichnet, dass** das Federelement wenigstens zwei Abschnitte unterschiedlicher Federkonstanten aufweist.

7. Handwerkzeugmaschine (1; 101) nach einem der vorhergehenden Ansprüche, **dadurch gekennzeichnet, dass** ein erster Abschnitt und ein zweiter Abschnitt unterschiedlicher Federkonstanten zueinander angewinkelt sind.

8. Handwerkzeugmaschine (1; 101) nach einem der vorhergehenden Ansprüche, **dadurch gekennzeichnet, dass** ein Trägheitsmoment des Torsionspendels (120; 220; 320; 420; 520) in wenigstens einer Schwingungsrichtung einstellbar ist.

9. Handwerkzeugmaschine (1; 101) nach einem der vorhergehenden Ansprüche, **dadurch gekennzeichnet, dass** der Linearantrieb (110) das Werkzeug (111) zyklisch mit einer Periodendauer entlang der Bewegungsachse (z; 112) bewegt und eine Schwingungsperiode des Torsionspendels (120; 220; 320; 420; 520) auf die Periodendauer abgestimmt ist.

10. Handwerkzeugmaschine (1; 101) nach einem der vorhergehenden Ansprüche, **dadurch gekennzeichnet, dass** eine Schwingungsbahn (125) des Torsionspendels (120; 220; 320; 420; 520) wenigstens teilweise in dem Handgriff (104) verläuft.

## Claims

1. A hand-held power tool comprising:
a tool housing (103);
a handgrip (104), which is decoupled from the tool housing (103) by vibrationdamping elements (105);
a linear drive (110) for moving a tool bit (111) along an axis of motion (112),
and **characterized by** a torsion pendulum comprising a torsion axle (121) suspended from the tool housing (103), at least one spring element (122) and at least one mass body (124), which is mechanically connected to the torsion axle (121) via the spring element (122).

2. A hand-held power tool according to Claim 1, **characterized in that** a plane of oscillation (126) of the torsion pendulum (120) extends parallel to a plane defined by a centre of gravity (118) of the hand-held power tool and the axis of motion (112).

3. A hand-held power tool according to Claim 1 or 2, **characterized in that** the torsion axle (121) is located close to the floor (131) of the tool housing (103).

4. A hand-held power tool according to one of the preceding claims, **characterized in that** the torsion axle (121) is further away from the axis of motion (112) than the at least one mass body (124) is from the axis of motion (112).

5. A hand-held power tool (1; 101) according to one of the preceding claims, **characterized in that** the spring element (222) takes the form of a leaf spring, which connects the torsion axle (221) to the mass body (224).

6. A hand-held power tool (1; 101) according to one of the preceding claims, **characterized in that** the spring element comprises at least two portions having different spring constants.

7. A hand-held power tool (1; 101) according to one of the preceding claims, **characterized in that** a first portion and a second portion having different spring constants are angled towards one another.

8. A hand-held power tool (1; 101) according to one of the preceding claims, **characterized in that** a moment of inertia of the torsion pendulum (120; 220; 320; 420; 520) can be adjusted in at least one direction of oscillation.

9. A hand-held power tool (1; 101) according to one of the preceding claims, **characterized in that** the linear drive (110) moves the tool bit (111) cyclically along the axis of motion (z; 112) for a period duration, and a period of oscillation of the torsion pendulum (120; 220; 320; 420; 520) is synchronized with the period duration.

10. A hand-held power tool (1; 101) according to one of the preceding claims, **characterized in that** a path of oscillation (125) of the torsion pendulum (120; 220; 320; 420; 520) runs at least partly in the handgrip (104).

## Revendications

1. Machine-outil manuelle comportant :
un carter de machine (103),
une poignée (104) séparée du carter de machine (103) par des éléments amortisseurs de vibrations (105),
un mécanisme d'entraînement linéaire (110) pour déplacer un coutil (111) le long d'un axe de déplacement (112), **caractérisée en ce que** la machine comporte en outre.
un pendule de torsion comportant un axe de torsion (121) suspendu au carter de machine (103), au moins un élément à ressort (122) et au moins un corps de masse (124) mécaniquement couplé à l'axe de torsion (121) par l'intermédiaire de l'élément à ressort (122).

2. Machine-outil manuelle selon la revendication 1, **caractérisée en ce qu'**un plan d'oscillation (126) du pendule de torsion (120) est parallèle à un plan qui est défini par un centre de gravité (118) de la machine-outil manuelle et l'axe de déplacement (112).

3. Machine-outil manuelle selon la revendication 1 ou 2, caractérisée ce que l'axe de torsion (121) est agencé au voisinage d'un fond (131) du carter de machine (103).

4. Machine-outil manuelle selon l'une des revendications précédentes, **caractérisée en ce que** l'axe de torsion (121) est agencé plus éloigné de l'axe de déplacement (112) que le au moins un corps de masse (124) par rapport à l'axe de déplacement (121).

5. Machine-outil manuelle (1 ; 101) selon l'une des revendications précédentes, **caractérisée en ce que** l'élément de ressort (122) est formé comme un ressort à lames qui relie l'axe de torsion (221) au corps de masse (224).

6. Machine-outil manuelle (1 ; 101) selon l'une des revendications précédentes, **caractérisée en ce que** l'élément de ressort comporte au moins deux parties ayant différentes constantes de rappel.

7. Machine-outil manuelle (1 ; 101) selon l'une des revendications précédentes, **caractérisée en ce qu'**une première partie et une seconde partie ayant différentes constantes de rappel sont inclinées l'une par rapport à l'autre.

8. Machine-outil manuelle (1 ; 101) selon l'une des revendications précédentes, **caractérisée en ce qu'**un moment d'inertie du pendule de torsion (120 ; 220 ; 320 ; 420 ; 520) peut être réglé dans au moins une direction d'oscillation.

9. Machine-outil manuelle (1 ; 101) selon l'une des revendications précédentes, **caractérisée en ce que** le mécanisme d'entraînement linéaire (110) déplace l'outil (111) de manière cyclique avec une durée de période le long de l'axe de déplacement (z ; 112) et une période d'oscillation du pendule de torsion (120 ; 220 ; 320 ; 420 ; 520) est adaptée à la durée de période.

10. Machine-outil manuelle (1 ; 101) selon l'une des revendications précédentes, **caractérisée en ce qu'**un trajet d'oscillation (125) du pendule de torsion (120 ; 220 ; 320 ; 420 ; 520) s'étend au moins partiellement dans la poignée (104).
